(19) Europäisches Patentamt
European Patent Office
Office européen des brevets

(11) **EP 3 299 410 A1**

(12) **EUROPÄISCHE PATENTANMELDUNG**

(43) Veröffentlichungstag:
**28.03.2018 Patentblatt 2018/13**

(51) Int Cl.:
*C08J 9/00* (2006.01)          *C08J 9/12* (2006.01)
*C08F 12/08* (2006.01)          *C08F 2/44* (2006.01)

(21) Anmeldenummer: **16189993.5**

(22) Anmeldetag: **21.09.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **SUMTEQ GmbH**
**50939 Köln (DE)**

(72) Erfinder:
• **Oberhoffer, Roland**
  **50935 Köln (DE)**
• **Müller, Alexander**
  **50672 Köln (DE)**

(74) Vertreter: **Freischem & Partner Patentanwälte mbB**
**Salierring 47-53**
**50677 Köln (DE)**

(54) **TEILVERNETZTER POLYMERSCHAUM MIT TRÜBUNGSMITTEL**

(57)     Die Erfindung betrifft einen teilvernetzten Polymerschaum, der Trübungsmittel enthält, ein Verfahren zu dessen Herstellung und die Verwendung von Trübungsmitteln in teilvernetztem Polymerschaum.

Fig. 1

EP 3 299 410 A1

**Beschreibung**

Die Erfindung betrifft einen teilvernetzten Polymerschaum, bei dem Polymerisations- und Schäumprozess räumlich und zeitlich getrennt ablaufen können, der Trübungsmittel enthält, ein Verfahren zu dessen Herstellung und die Verwendung von Trübungsmitteln in teilvernetztem Polymerschaum.

Die Herstellung beispielsweise von Polystyrolschäumen wird im Stand der Technik in diversen Publikationen beschrieben. Hierbei handelt es sich entweder um eine Partikelschaum-Technologie, bei der die Polymerpartikel bereits im Herstellungsprozess mit einem niedermolekularen Treibmittel wie Cyclopentan imprägniert und erst im nächsten Schritt durch Temperierung mit Heißdampf aufgeschäumt werden (diskontinuierliches Verfahren). Dies wird beispielsweise in der Patentanmeldung DE10358800A1 dargestellt, wobei hier zusätzlich noch eine ellipsoidale Geometrie des eingeschlossenen Treibmittels beschrieben wird. Oder zum Anderen gibt es die Möglichkeit das Treibmittel wie beispielsweise Kohlenstoffdioxid unter erhöhtem Druck in eine Polymerschmelze (Temperatur muss hierzu oberhalb der Schmelztemperatur des Polymers sein) zu lösen und durch anschließender Expansion am Ende eines Extruders zu einem Schaum aufzuschäumen (kontinuierliches Verfahren; vgl. EP 849 309 B1, US 4636527 A, WO 1993 022371 A1). Bei vielen Schäumen bzw. Schäumprozessen sind die Herstellung des notwendigen Polymers aus dem Monomer oder Monomergemischen zeitlich und räumlich vom Aufschäumprozess getrennt (beispielsweise Styropor@ oder Neopor®). Dies bedeutet, dass der chemische Polymerisationsprozess in einem separaten Produktionsprozess abläuft bzw. der physikalische Aufschäumprozess in einer 2. Anlage stattfinden muss. Für die Herstellung eines duroplastischen Polymerschaums wie bspw. beim Polyurethan können die beiden Prozesse nicht voneinander getrennt betrachtet werden, da während der Polymerisation bereits gezielt auch die entstehende Polymermasse aufgeschäumt wird.

Für beide Schaumtypen wird zur Verbesserung der Dämmeigenschaften Infrarot Trübungsmittel zugegeben, wenn die Dichte des Polymerschaums kleiner 30 kg/m3 beträgt. Durch diese Maßnahme war es möglich den Materialeinsatz in den Schäumen in den vergangenen Jahren bei gleichbleibender Performance hinsichtlich der Wärmedämmung drastisch zu reduzieren (vgl. EP 0 372 343 B1, EP 0 620 246 B1, EP 2 402 389 A2, DE 10 2008 047 594 A1, DE 20 2010 013 850 U1, EP 2 092 002 B1, US 8114476 B2, US 2010 0148110 A1).

Nachteil an diesen Verfahren ist die aufgrund von Alterungsprozessen bei der Schaumbildung eintretende Vergröberung der Schaumstruktur, was zwangsläufig zu Porengrößen von größer als 10 Mikrometern (μm) führt. Kommerziell sind keine luftgefüllten Polymerschäume erhältlich, deren Dämmperformance unter 26 mW/mK liegt. Hintergrund ist, dass bislang keine homogenen Schaumstrukturen mit einer Porengröße unter 10 μm und einem dafür notwendigen Volumen-Expansions-Verhältnis (VER) kommerziell erhältlich war. Dies resultiert daraus, dass die Wärmeleitung eines Schaums die Summe aus der Wärmeleitung des Matrixmaterials (Polymer), der Wärmeleitung des Gases in den Poren (Luft) und des Beitrags der Infrarot Strahlung (Wärmestrahlung), die den Schaum passieren kann, ist. Für alle kommerziell herstellbaren Schäume gilt, dass die Wärmeleitfähigkeit der Luft bei 25 °C und Atmosphärendruck (im weiteren Verlauf als Normalbedingungen bezeichnet) 26 mW/mK beträgt und aus diesem Grund der Wert auch nicht unterschritten werden kann.

Nichtsdestotrotz erreichen die effizientesten luftgefüllten Polystyrolschäume im Stand der Technik Wärmeleitfähigkeiten von 31 mW/mK (Normalbedingungen). Dies wird erreicht durch eine Reduktion der Dichte auf unter 20 kg/m3 in Kombination mit einem Infrarot (IR)-Trübungsmittel. Die Notwendigkeit eines IR-Trübungsmittel wurde erst durch die Reduktion der Schaumdichte offensichtlich. Hintergrund ist der exponentiell ansteigende Infrarot Strahlungsanteil an der Gesamtwärmeleitung bei immer kleiner werdenden Dichten. Der Beitrag der InfrarotStrahlung in Polymerschäumen mit einer Dichte > 30 kg/m$^3$ nimmt aufgrund ausreichender Streuung und Absorption, der relevanten Wellenlängen, nur einen geringen Beitrag an der Gesamtwärmeleitung von 5-15 % an. Aus diesem Grunde werden Polymerschäume mit Dichten > 30 kg/m$^3$ üblicherweise nicht mehr mit Trübungsmittel versehen, um deren Wärmeleitung zu beeinflussen.

Bereits 1909 konnte Knudsen theoretisch zeigen, dass durch eine Verkleinerung eines Raumes in den Bereich der mittleren freien Weglänge der darin eingeschlossenen Gasmoleküle eine signifikante Reduzierung der Wärmeleitung des Gases hervorgerufen werden kann (vgl. M. Knudsen; Annalen der Physik; 1909). Im Falle von Luft beträgt die mittlere freie Weglänge etwa 70 Nanometer (nm) bei Normalbedingungen. Aus diesen Berechnungen geht hervor, dass die Schaumporen in Dämmmaterialien auf unter einen Mikrometer reduziert werden müssen, um eine signifikante Reduktion der Wärmeleitung der Luft zu erhalten und somit luftgefüllte Polymerschäume mit einer Wärmeleitung unter 26 mW/mK zu realisieren. Hinsichtlich der wissenschaftlichen Veröffentlichungen von nanoporösen Polymeren, sind alle bisherigen Verfahren noch nicht in der Lage die Kombination aus Nanoporosität bei geringer Dichte zu gewährleisten. Dies wird in dem Review von Okolieocha anschaulich dargestellt, da hier sowohl die Porengrößen, als auch die korrespondierenden Schaumdichten angegeben werden (vgl. Okolieocha C., Raps D., Subramaniam K., Altstädt V.; European Polymer Journal 73; 500-519; 2015). Um tatsächlich einen Polymerschaum mit einer Wärmeleitung unterhalb der eigentlichen Luftleitung (26 mW/mK) zu erhalten, müsste die Kombination aus Nanoporosität und einer verhältnismäßig moderaten Matrix-Wärmeleitung gegeben sein. Hierzu sollte der Luftanteil mindestens 80 Vol.% des Schaums ausmachen. Um einen entsprechenden nanoporösen Polymerschaum mit einer hohen Wärmedämmung zu erhalten, sollten idealerweise Porengröße, Homogenität und Größe der Poren sowie die Schaumdichte gut aufeinander abgestimmt sein.

Nanoporöse Polymerschäume mit niedriger Dichte konnten bislang nicht mit einer hinreichenden Wärmedämmung hergestellt werden (vgl. DE 10 2013 223 391 A1).

US 8604091 B2 und US 8875472 B2 offenbaren teilvernetzte PU-Schäume mit sehr großen Poren.

Die Aufgabe der vorliegenden Erfindung liegt darin, eine Technologie bereitzustellen, mit der nanoporöse Polymerschäume mit einer hinreichenden Wärmedämmung möglich sind.

In einer ersten Ausführungsform wird die der Erfindung zu Grunde liegende Aufgabe durch einen teilvernetzten Polymerschaum gelöst, der Trübungsmittel enthält, wobei die mittlere Porengröße im Median in einem Bereich von 10 nm bis 10 $\mu$m liegt.

Es hat sich überraschend herausgestellt, dass nur durch die Teilvernetzung Polymerschäume beispielsweise mit kleinen Poren hergestellt werden können, die eine hinreichende Wärmedämmung aufweisen. Weiterhin hat sich überraschend herausgestellt, dass im Gegensatz zur bisherigen herrschenden Meinung bei solchen Polymerschäumen Trübungsmittel notwendig sind, um eine hinreichende Wärmedämmung zu erzielen auch wenn die Dichte bereits > 30 kg/m$^3$ ist.

Polymerschaum

Vorzugsweise liegt die mittlere Porengröße im Median in einem Bereich von 50 nm bis 5 $\mu$m, ganz besonders bevorzugt in einem Bereich von 100 nm bis 2 $\mu$m. Vorzugsweise liegt die Obergrenze der Porengröße in Verbindung mit einer der beiden vorgenannten Untergrenzen der Porengröße in aufsteigender Bevorzugung bei 5 $\mu$m, 3 $\mu$m, 1 $\mu$m und ganz besonders bevorzugt bei 0,5 $\mu$m. Die Porengröße kann beispielsweise per Elektronenmikroskopie ermittelt werden.

Vorzugsweise weisen wenigstens 75 Vol.%, besonders bevorzugt wenigstens 85 Vol.%, ganz besonders bevorzugt wenigstens 95 Vol.%, der Poren einen Durchmesser in einem Bereich von 50 nm bis 10 $\mu$m, ganz besonders bevorzugt in einem Bereich von 100 nm bis 5 $\mu$m auf.

Die Porengröße kann beispielsweise wie folgt bestimmt werden: um die Struktur der erzeugten nanoporösen Materialien abzubilden, kann zunächst eine frische Bruchkante erzeugt werden. Anschließend kann die Probe, mit der Bruchkante nach oben zeigend, auf dem Probenteller fixiert werden. Damit die bei der Messung entstehende Aufladung abgeleitet werden kann, kann zur Fixierung Silberleitlack verwendet werden. Bevor die Aufnahmen durchgeführt werden können, wird die Probe beispielsweise mit Gold beschichtet, damit es nicht zu lokalen Aufladungseffekten kommt. Hierzu wird beispielsweise die Beschichtungsanlage K950X mit dem Sputterzusatz K350 der Firma EMITECH verwendet. In allen Fällen erfolgt die Goldbesputterung beispielsweise bei einem Argondruck von ca. 10-2 mbar, wobei stets für 30 Sekunden ein Strom von 30 mA angelegt wurde. Die Schichtdicke der auf diese Weise aufgetragenen Goldschicht beträgt beispielsweise in etwa zwischen 5 und 15 nm. Die elektronenmikroskopischen Aufnahmen werden beispielsweise an einem Gerät des Typs SUPRA 40 VP der Firma ZEISS durchgeführt. Bei diesem Gerät sind Beschleunigungsspannungen von bis zu 30 kV und eine maximale Auflösung von 1,3 nm möglich. Die Aufnahmen werden beispielsweise bei einer Beschleunigungsspannung von 5 kV mit dem InLens-Detektor aufgezeichnet. Zur Bestimmung des mittleren Porendurchmessers und der mittleren Stegdicke der nano- und mikroporösen Schäume wird beispielsweise ein mit dem beschriebenen Rasterelektronenmikroskop aufgenommenes Bild gewählt und mit dem Computerprogramm Datinf Measure wenigstens 300 Poren bzw. Stege ausgemessen um eine ausreichend gute Statistik zu gewährleisten.

Vorzugsweise liegt das Volumen-Expansions-Verhältnis (Volume Expansion Ratio, VER) des Polymerschaums (beispielsweise für Polymere mit Dichten von 900 - 1200 kg/m$^3$) in einem Bereich von 4 bis 30, besonders bevorzugt in einem Bereich von 7 bis 25. Anhand des VER lassen sich Polymerschäume miteinander vergleichen, deren Polymerdichten unterschiedlich sind.

$$VER = (\text{Volumen Schaum}) / (\text{Volumen Polymer})$$

Vorzugsweise liegt die Dichte des Polymerschaums in einem Bereich von 30 bis 300 kg/m$^3$, besonders bevorzugt in einem Bereich von 40 bis 200 kg/m$^3$, ganz besonders bevorzugt in einem Bereich von 45 bis 150 kg/m$^3$.

Vorzugsweise kann die Untergrenze der Dichte des Polymerschaums in Verbindung mit der vorgenannten Obergrenze in aufsteigender Bevorzugung 40, 45, 50 und ganz bevorzugt 60 kg/m$^3$ sein. Vorzugsweise kann die Obergrenze der Dichte des Polymerschaums in Verbindung mit den vorgenannten Untergrenzen in aufsteigender Bevorzugung 250, 200, 175, und besonders bevorzugt 150 kg/m$^3$ sein.

Vorzugsweise kann für die Kombination aus Dichte und Porengröße der Schäume ein Faktor (FOM) für Porendurchmesser zwischen 10 nm und 10 $\mu$m definiert werden:

$$FOM=(\ln(dPore/0{,}15\ nm))/VER$$

wobei dPore (Durchmesser der Poren im Median) die Einheit Nanometer trägt.

Hierbei gilt, dass alle bisher bekannten Schäume mit Porengrößen unterhalb von 10 μm aus dem Stand der Technik einen Faktor FOM ≥ 1,2 zeigen. Der erfindungsgemäße Polymerschaum hingegen weist vorzugsweise einen Faktor FOM < 1,2 auf. Unabhängig davon beträgt der Faktor FOM vorzugsweise wenigstens 0,01.

Vorzugsweise liegt die Wärmeleitung des Polymerschaums in einem Bereich von 1 bis 30 mW/mK bei Normalbedingungen (1 atm, 25 °C). Vorzugsweise kann die Obergrenze der Wärmeleitung des Polymerschaums in Verbindung mit der vorgenannten Untergrenze in aufsteigender Bevorzugung 28, 27 und ganz bevorzugt 26 mW/mK sein. Diese geringen Wärmeleitungen sind mit luftgefüllten Polymerschäumen im Stand der Technik noch nicht experimentell möglich gewesen, da bereits die Luftwärmeleitung in großporigen Schäumen etwa 26 mW/mK bei Normalbedingungen beträgt. Diese bevorzugt erfindungsgemäßen Schäume, die aufgrund ihrer Beschaffenheit nicht mit anderen Schaumstoffen vergleichbar sind und auch in keinem vergleichbaren Produktionsprozess herstellbar sind, stellen eine neue Klasse an Schaumstoffen dar.

Vorzugsweise ist das Monomer, aus dem der Polymerschaum vorzugsweise überwiegend erhalten wurde, ausgewählt aus Styrol und Derivate, Methylmethacrylat und Derivate, Milchsäure und Derivate, Vinylchlorid und Derivate, thermoplastisches Polyurethan und Derivate, und/oder Polyethylen und Derivate, und/oder Mischungen der vorgenannten Monomere.

Derivate des Styrol im Sinne der vorliegenden Erfindung können beispielsweise Alkylstyrol, Alkoxystyrol, Halogenstyrol, Dihalogenstyrol oder Divinylstyrol sein und insbesondere ausgewählt sein aus der Gruppe 4-Bromstyrol, 4-Methylstyrol, 4-Ethylstyrol, 4-Propylstyrol, 4-iso-Butyl-styrol, 4-Methoxy-styrol, 4-Ethoxy-styrol, 2-Vinyl-6-brom-naphthalin, 2-Vinyl-6-methyl- naphthalin oder 2-Vinyl-6-methoxy-naphthalin, p-Chlorstyrol, 2,4-Dimethylstyrol, 4-Vinylbiphenyl, Vinylnaphthalin, Vinylanthracen und/oder Mischungen derselben.

Derivate des Methylmethacrylat im Sinne der vorliegenden Erfindung können beispielsweise Acrylsäure, Ethylmethacrylat, 2-Ethylhexylmethacrylat, Isobornylmethacrylat, Benzylmethacrylat, 1-Ethoxy-1-propylmethacrylat, Glycidylmethacrylat, 2-Trimethylsilyloxyethylmethacrylat, 2, 2, 2-Trifluorethylmethacrylat, 4-(Tetrahydro-2-pyranyloxy)benzylmethacrylat, Laurylmethacrylat, Ethoxytriethylenglycolmethacrylat, Butoxyethylmethacrylat, Methoxyethoxyethylmethacrylat, Sorbylmethacrylat, 2-Acetoxyethylmethacrylat, 3-Trimethoxysilylpropylmethacrylat, Allylmethacrylat, Octylmethacrylat, Methoxypolyethylenglycolmethacrylat, Ethoxyethylmethacrylat, Tetrahydropyranylmethacrylat, t-Butylmethacrylat und 2-Dimethylaminoethylmethacrylat und/oder Mischungen derselben sein.

Vorzugsweise kann der erfindungsgemäße Polymerschaum auch durch Polymerisierung einer beliebigen Mischung der vorgenannten Monomere erhalten werden.

Vorzugsweise ist ein Starter enthalten. Vorzugsweise ist der Starter ein Radikalstarter der durch thermische Energie zerfällt und dadurch zwei Radikale freigesetzt werden wie z.B. Azobisisobutyronitril (AIBN), Dibenzoylperoxid, Dicumylperoxid, Peroxoketale.

Vorzugsweise liegt der Vernetzungsgrad des Polymerschaums (bezogen auf das eingesetzte Monomer) in einem Bereich von 0,05 mol% bis 80 mol%, besonders bevorzugt in einem Bereich von 0,1 bis 10 mol%, ganz besonders bevorzugt im Bereich von 0,1 bis 2 mol%.

Der Vernetzungsgrad im Sinne der Erfindung ist ein quantitatives Maß zur Charakterisierung von polymeren Netzwerken. Er wird beispielsweise berechnet als Quotient aus der Molzahl vernetzter Grundbausteine und der Molzahl der insgesamt in diesem makromolekularen Netzwerk vorhandenen Grundbausteine (Monomer-Moleküle). Er wird entweder als dimensionslose Zahl oder in Prozent (Stoffmengenanteil) angegeben. Eng damit verbunden (und oft als Synonym gebraucht) ist der Begriff der Vernetzungsdichte (hier ist die Zahl der Vernetzungsstellen auf das Volumen bezogen).

Durch die Teilvernetzung ist der erfindungsgemäße Polymerschaum vorzugsweise auch nicht zerstörungsfrei schmelzbar (vgl. Beispiel 8). Alle relevanten Polymerschäume aus dem Stand der Technik sind üblicherweise schmelzbar, also thermoplastisch. Durch die Teilvernetzung ist der erfindungsgemäße Polymerschaum vorzugsweise auch nicht in einem Lösungsmittel lösbar. Üblicherweise ist für ein Polymer das eigene Monomer, aus dem das Polymer aufgebaut ist, das beste Lösungsmittel für das jeweilige Polymer. Vorzugsweise ist der erfindungsgemäße Polymerschaum im eigenen Monomer nicht löslich.

Der Polymerschaum enthält vorzugsweise auch einen Vernetzer. Der Vernetzer weist vorzugsweise wenigstens 2 funktionale Gruppen auf, die für eine Polymerisationsreaktion geeignet ist. Vorzugsweise sind die funktionalen Gruppen aus Vinyl-, Allyl-, Carboxylat-, Ethoxy-, Methoxy-, Amin-, Alkohol-, Keton- u Allylketongruppen ausgewählt. Unabhängig davon oder in Verbindung damit können die Vernetzer organisch substituierte Silane sein. Besonders bevorzugt ist der Vernetzer ausgewählt aus Divinylbenzol, N, N-Methylenbisacrylamid und Ethylenglycoldimethacrylat.

Der Vernetzer ist vorzugsweise in dem Polymerschaum in einem Bereich von 0,05 bis 10 Gew.% bezogen auf das Gesamtgewicht des Polymerschaums in dem Polymerschaum enthalten.

Vorzugsweise enthält das der Polymerschaum auch unvernetztes Polymer. In dieser Patentanmeldung versteht man unter unvernetztem Polymer ein Polymer, das durch Polymerisation von Monomer-Molekülen (monofunktionale, polymerisierbares Molekül) aufgebaut ist. Es liegt mikroskopisch in Form von unvernetzten Molekülen vor. Vorzugsweise ist im Polymerschaum unvernetztes Polymer in einem Bereich von 2 bis 30 Gew.% in Bezug auf das Gesamtgewicht des Polymerschaums enthalten.

Vorzugsweise ist der Polymerschaum offenzellig. Vorzugsweise ist der Polymerschaum (z.B. im Vakuum) evakuierbar, ohne zerstört zu werden. Vorzugsweise wird die Ausgangsdichte des Schaums nicht signifikant durch das Vakuum erhöht (Schrumpf-Prozess < 30 Vol%). Zur Evakuierung wird beispielsweise die Probe in eine Kunststofftüte eingeschweißt.

Vorzugsweise beträgt der Anteil zur Gesamtwärmeleitung durch Infrarotstrahlung bis zu 25%, besonders bevorzugt bis zu 15%, ganz besonders bevorzugt bis zu 10%.

Trübungsmittel

Vorzugsweise ist das Trübungsmittel ein Infrarot-Trübungsmittel. Es wurde bislang angenommen, dass eine ausreichend hohe Schaumdichte > 30 kg/m$^3$ den infraroten Strahlungsanteil, der einen solchen Schaum passieren kann, als vernachlässigbar klein erachtet werden kann. In wissenschaftlichen Veröffentlichungen wird der IR Beitrag in nanoporösen Schäumen theoretisch betrachtet und als vernachlässigbar klein bezeichnet (vgl. Ferkl P., Pokorny R., Bobak J., Chem Eng Sci; 97:50-8; 2013). In einer Veröffentlichung von Notario et al. wird an nanoporösen Polymermaterialien Wärmeleitfähigkeitsmessungen durchgeführt, die so interpretiert werden, dass eine optimistische Annahme kein signifikanten Beitrag durch IR-Strahlung erwarten lässt (vgl. Notario B., Pinto J., Solorzano E., Rodriguez-Perez M.A., Polymer; 57-67; 2015). Es stellte sich gegen die Erwartungen heraus, dass selbst bei Schaumdichten von > 30 kg/m3 der infrarote Strahlungsanteil einen signifikanten Beitrag zur gesamten Wärmeleitung beiträgt und somit diese Schäume keine verbesserten Eigenschaften hinsichtlich der Wärmedämmung gegenüber dem Stand der Technik hatten, obwohl der Porendurchmesser deutlich kleiner war (Beispiel: Dichte □ > 45 kg/m3; dPore < 10 □m; vgl. Beispiele 5 und 6).

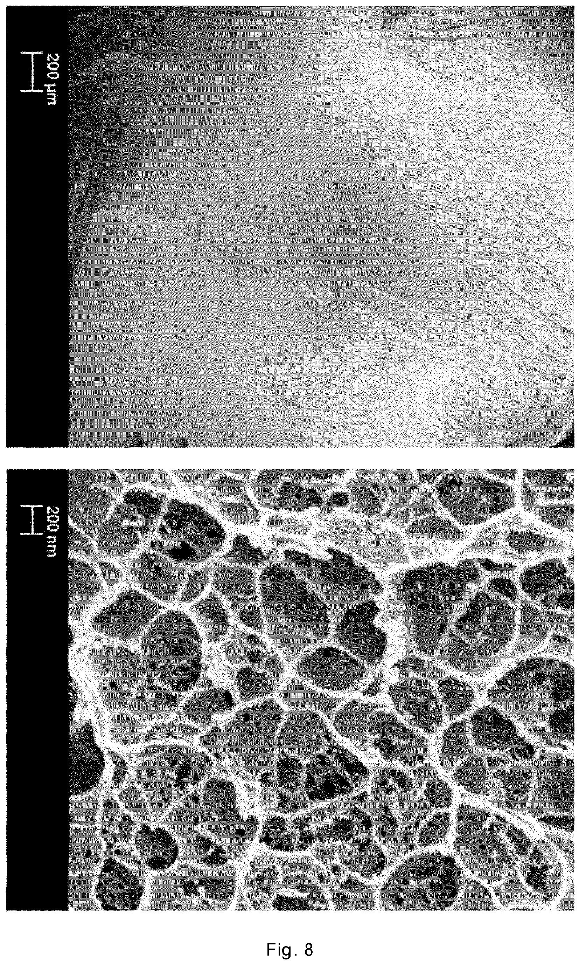

Die Identifikation dieses Sachverhaltes konnte nur durch aufwendige Wärmeleitfähigkeitsmessungen an makroskopischen Proben (etwa. 10 cm Durchmesser und 1,5 cm Dicke) mit einem Plattengerät, das dem Fachmann wohl bekannt ist, durchgeführt werden. Diese mussten druck- und temperaturabhängig vermessen werden, um die einzelnen Wärmeleitungsbeiträge in diesen Schäumen auflösen zu können. Erst hier stellte sich heraus, dass Polymerschäume mit Schaumporen beispielsweise kleiner 10 μm und einer Dichte beispielsweise größer als 30 kg/m3 einen infraroten Strahlungsanteil bei Normalbedingungen von bis zu 40 % der gesamten Wärmeleitung haben und somit für Dämmanwendungen keine Verbesserung gegenüber großporigen Schäumen darstellen, obwohl der Beitrag der Luftwärmeleitung in Beispiel 7 (s. Fig. 8) signifikant reduziert wurde.

Vorzugsweise absorbiert oder streut das Trübungsmittel Strahlung mit einer Wellenlänge in einem Bereich von 1 bis 100 μm, ganz besonders bevorzugt in einem Bereich von 3 bis 30 μm.

Vorzugsweise weist das Trübungsmittel eine mittlere Partikelgröße im Median in einem Bereich von 0,01 bis 5 μm auf oder eine BET Oberfläche von > 10 m$^2$/g. BET Messung ist eine Größenbestimmung von Oberflächen mittels Gasadsorption, die nach den Entwicklern der zugrunde liegenden Theorie (Brunauer, Emmett und Teller) benannt wurde.

Die vorgenannte Untergrenze der Partikel des Trübungsmittels kann vorzugsweise mit aufsteigender Bevorzugung mit einer Obergrenze von 5000, 1000, 500, 200 und ganz besonders bevorzugt 50 nm kombiniert werden. Die Partikelgröße kann beispielsweise durch Lichtstreuung, Rasterelektronenmikroskopie oder mit einem Lichtmikroskop bestimmt werden. Die vorgenannten Größenangaben beziehen sich vorzugsweise auf Primärpartikel und ganz besonders bevorzugt nicht auf Agglomerate.

Vorzugsweise ist das Trübungsmittel in dem Polymerschaum in einem Bereich von 1 bis 30 Gew.%, besonders bevorzugt 1,5 bis 15 Gew.%, bezogen auf die Gesamtmasse des Polymerschaums enthalten.

Vorzugsweise enthält das der Polymerschaum auch unvernetztes Polymer. Vorzugsweise ist im Polymerschaum unvernetztes Polymer in einem Bereich von 2 bis 15 Gew.% in Bezug auf das Gesamtgewicht des Polymerschaums enthalten.

Vorzugsweise ist das Trübungsmittel organisch oder anorganisch.

Das Trübungsmittel kann beispielsweise ein organischer Farbstoff sein.

Vorzugsweise ist das Trübungsmittel ausgewählt aus der Gruppe Graphit, Ruße, Kohlenstoffderivate wie Multiwallcarbonnanotubes, Fulleren, Graphen usw., Metalloxide wie bspw. Titandioxid, Eisenoxide oder Zirkondioxid sowie Mischungen derselben. Ganz besonders bevorzugt handelt es sich bei dem Trübungsmittel um sogenannten Furnace Ruß bzw. Flammruß bspw. von der Firma Orion Engineered Carbons.

Vorzugsweise liegt das Gewichtsverhältnis von Trübungsmittel zu unvernetztem Polymer in einem Bereich von 30:70 bis 50:50.

Verfahren zur Herstellung des Polymerschaums

In einer weiteren Ausführungsform wird die der Erfindung zu Grunde liegende Aufgabe gelöst durch ein Verfahren zur Herstellung des Polymerschaums, in dem wenigstens folgende Schritte durchgeführt werden:

a) Zugabe von Trübungsmittel und Vernetzer zu Monomer, um eine Monomermischung zu erhalten,

b) Polymerisieren der Monomermischung,

c) Trocknen des erhaltenen Polymers,

d) Quellen des Polymers mit einem Quellmittel,

e) das gequollen Polymer wird in eine CO2-Atmosphäre mit einem Druck in einem Bereich von 50 bis 500 bar und einer Temperatur in einem Bereich von 0 bis 120 °C gebracht, und

f) der Druck wird nach einer Wartezeit von 10 bis 180 Minuten auf den atmosphärischen Umgebungsdruck abgesenkt, womit der Polymerschaum erhalten wird.

Vorzugsweise laufen Polymerisations- und Schäumprozess räumlich und zeitlich getrennt ab.

Das Quellmittel kann beispielsweise ein organisches Lösungsmittel sein.

Das Monomer ist vorzugsweise teilweise funktionalisiert. Vorzugsweise weisen 0,001 bis 1 mol% aller Monomermoleküle eine im Vergleich zu den übrigen Monomermolekülen zusätzliche Funktionelle Gruppe auf. Diese kann beispielsweise eine Carboxylatgruppe sein.

Vorzugsweise liegt der Druck in Schritt e) in einem Bereich von 70 bis 250 bar.

Vorzugsweise liegt die Temperatur in Schritt e) in einem von 30 bis 90 °C.

Vorzugsweise enthält die Monomermischung auch unvernetztes Polymer. Vorzugsweise wird in Schritt a) auch unvernetztes Polymer zugegeben. Vorzugsweise liegt das Gewichtsverhältnis von Trübungsmittel zu unvernetztem Polymer in einem Bereich von 20:80 bis 80:20, besonders bevorzugt in einem Bereich von 30:70 bis 50:50.

Vorzugsweise ist in der Monomermischung unvernetztes Polymer in einem Bereich von 2 bis 30 Gew.%, besonders bevorzugt in einem Bereich von 2 bis 15 Gew.%, in Bezug auf das Gesamtgewicht der Monomermischung enthalten.

Das unvernetzte Polymer weist vorzugsweise eine enge Molmassenverteilung auf. Vorzugsweise weicht in der Molmassenverteilung die gewichtsmittlere Molmasse Mw weniger als 15 % von der zahlenmittleren Molmasse Mn ab.

Es wurde überraschend herausgefunden, dass hierdurch das Trübungsmittel im Monomer vermutlich durch die Erhöhung der Viskosität besser stabilisiert werden konnte. Da das Monomer eine Dichte von typischerweise kleiner als 1 $g/cm^3$ und das Trübungsmittel eine Dichte von typischerweise größer als 1 $g/cm^3$ aufweist, würde man eigentlich erwarten, dass sich die Monomermischung mit der Zeit in zwei Phasen aufteilt. Dies konnte aber vor allem nach Zugabe von unvernetztem Polymer nicht mehr im relevanten Zeitrahmen beobachtet werden (Dauer der Polymerisation). Hier wird eine Art mizellenartigen Stabilisierung der IR-Trübungsmittel Primärpartikel vermutet, die durch teilweise endständige funktionale Gruppen des unvernetzte Polymers hervorgerufen wird.

Vorzugsweise wird das Trübungsmittel vor der Polymerisierung zum Monomer dazugegeben. Vorzugsweise wird das Trübungsmittel im Monomer vor der Polymerisierung, besonders bevorzugt wenigstens 40 Minuten lang, gerührt. Der Rührer wird vorzugsweise auf eine Geschwindigkeit von wenigstens 50 U/min eingestellt. Vorzugsweise kann das Monomer mit dem Trübungsmittel und ggf. dem unvernetzten Polymer während des Rührens mit Ultraschall beaufschlagt werden. Vorzugsweise wird die Monomermischung in Schritt b) in Wasser als Suspension polymerisiert. Dies ist besonders vorteilhaft, da man dann kugelförmiges Polymergranulat erhält.

Vorzugsweise ist das Quellmittel ein Keton, besonders bevorzugt Aceton. Das Quellen des Polymers geschieht vorzugsweise unter Normalbedingungen durch untertauchen des Polymers in dem Quellmittel. Das Quellen geschieht vorzugsweise über einen Zeitraum in einem Bereich von 5 bis 500 Minuten. Der Quellprozess läuft vorzugsweise freiwillig ab und kann bereits bei Raumtemperatur und ohne zusätzlichen Energieeintrag durchgeführt werden. Für eine beschleunigte Quellung kann das Polymer und das Quellmittel auch in einen druckfesten Behälter gegeben und die Temperatur erhöht werden.

Verwendung des Trübungsmittels

In einer weiteren Ausführungsform wird die der Erfindung zu Grunde liegende Aufgabe durch die Verwendung von Trübungsmittel in teilvernetztem Polymerschaum gelöst.

Weitere praktische Ausführungsformen und Vorteile der Erfindung sind nachfolgend im Zusammenhang mit den Zeichnungen beschrieben. Es zeigen:

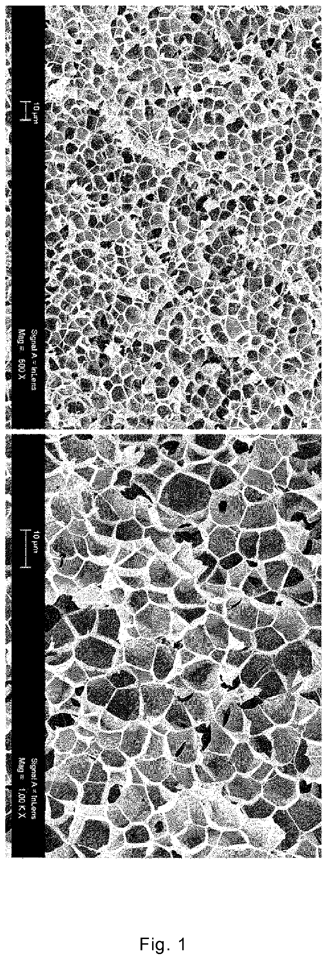

Fig. 1    Rasterelektronenmikroskopische Aufnahme eines mikrozellularen mit Flammruss 101 getrübten Polystyrolschaums. Die Dichte beläuft sich auf 44 kg/m3 mit einer homogenen Porenstruktur im Bereich von 7 □m und einer Trübungsmittelkonzentration von 10 Gew%. Die Wärmeleitung wurde bei Normalbedingungen auf 30,2 mW/mK ($\square$10 = 29,5 mW/mK) und im Vakuum bei (ca. 1 mbar) auf ($\square$10 ≈ 5,5 mW/mK) bestimmt. Zudem wurde im Vakuum anhand temperaturabhängiger Messungen die Wärmeleitfähigkeit gegen die dritte Potenz der Temperatur aufgetragen und durch Extrapolation auf 0 Kelvin eine Matrixleitung von ca. 4 mW/mK abgeschätzt.

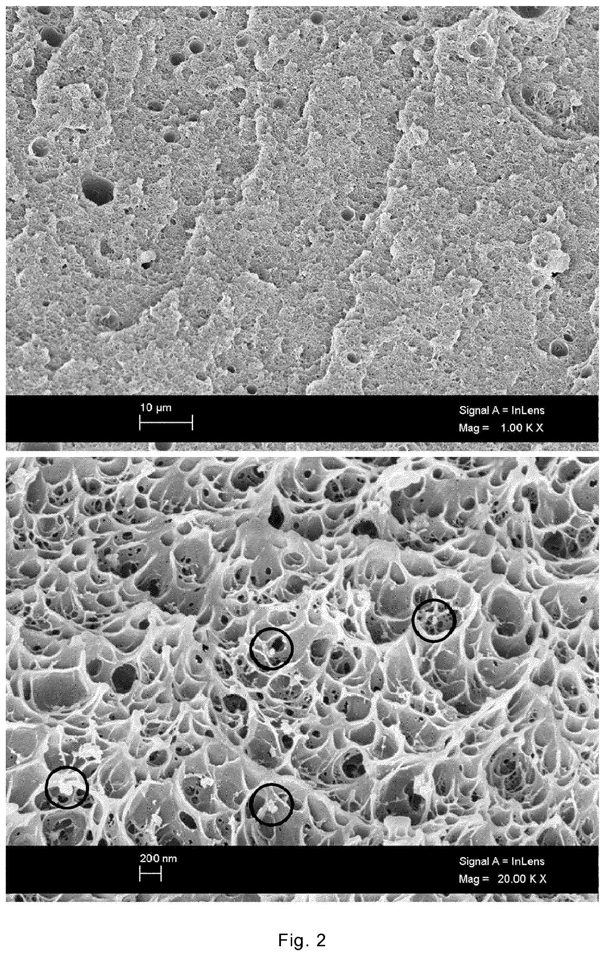

Fig. 2 Rasterelektronenmikroskopische Aufnahme eines nanozellularen mit Furnace Ruß getrübten Polystyrolschaums. Die Dichte beläuft sich auf 100 kg/m3 mit einer Porenstruktur im Bereich von 0,2 $\square$m mit einigen wenigen Poren < 10 $\square$m aber größer 1$\square$m und einer Trübungsmittelkonzentration von 4,0 Gew%. Die Wärmeleitung wurde bei Normalbedingungen auf 29,7 mW/mK bestimmt. Zudem wurde bei gleichen Bedingungen im Vakuum ein Wärmeleitung von ca. 13 mW/mK bestimmt. Der Beitrag der Polymermatrix wird auf 9 mW/mK abgeschätzt, was für die IR Strahlung einen Betrag von 4 mW/mK bedeutet. Die Partikel des Trübungsmittels sind durch Einkreisen gekennzeichnet.

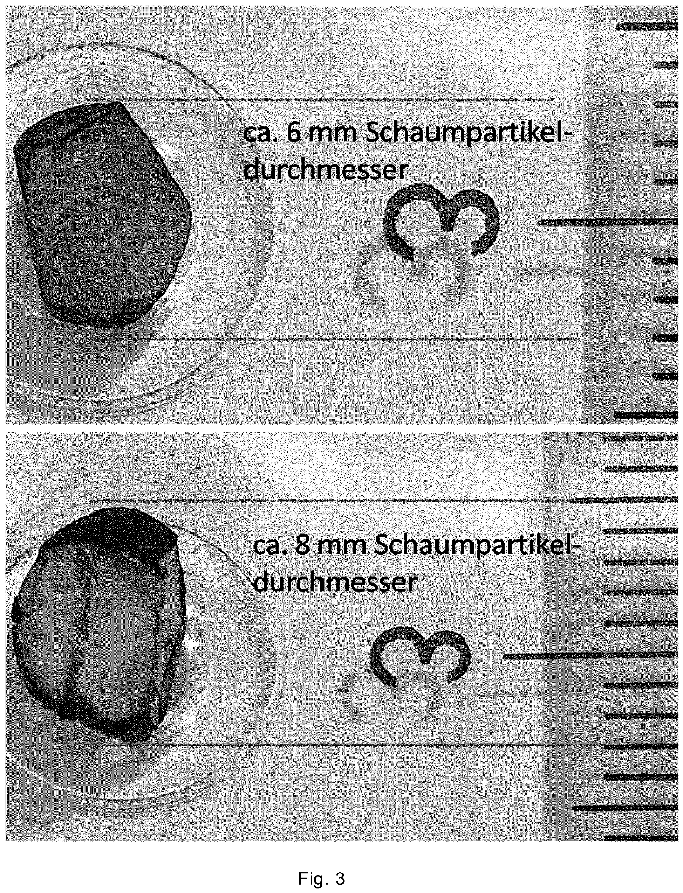

Fig. 3 Fotos der Bruchkanten jeweils eines Schaumpartikels aus Beispiel 1 (oben) und Beispiel 2 (unten).

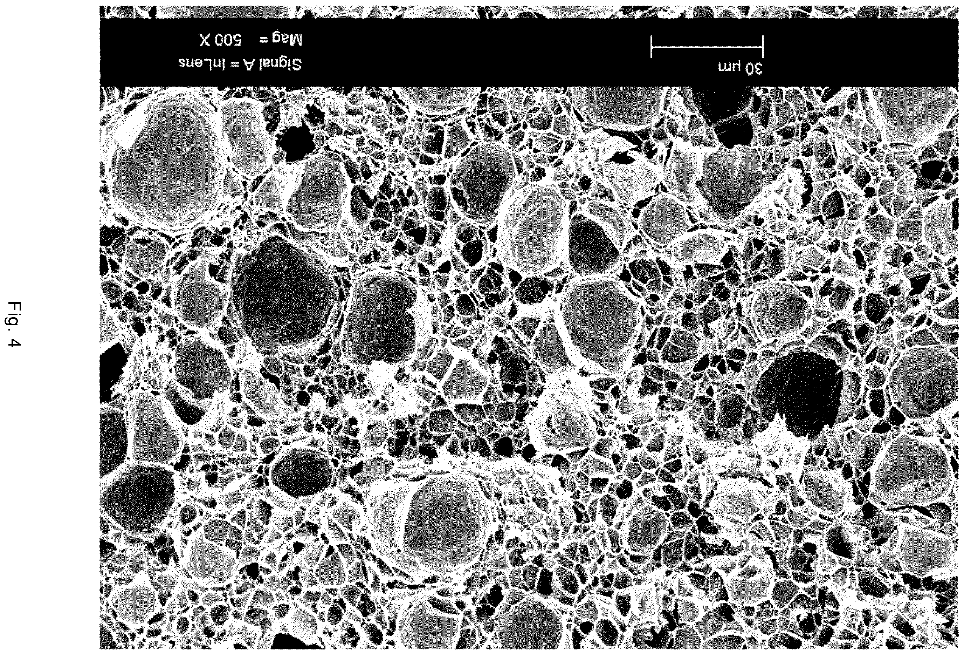

Fig. 4 Rasterelektronenmikroskopische Aufnahme eines mikrozellularen mit Flammruss 101 getrübten Polystyrolschaums. Die Dichte beläuft sich auf 43 kg/m3 mit einer bimodalen Porenstruktur, wobei ca. 50 Vol% der Poren deutlich größer 10 $\square$m sind und ca. 50 Vol% der Poren im Bereich zwischen 5 und 10 $\square$m liegen. Dies ist ein Beispiel für inhomogen verteiltes, agglomeriertes Trübungsmittel im Schaum.

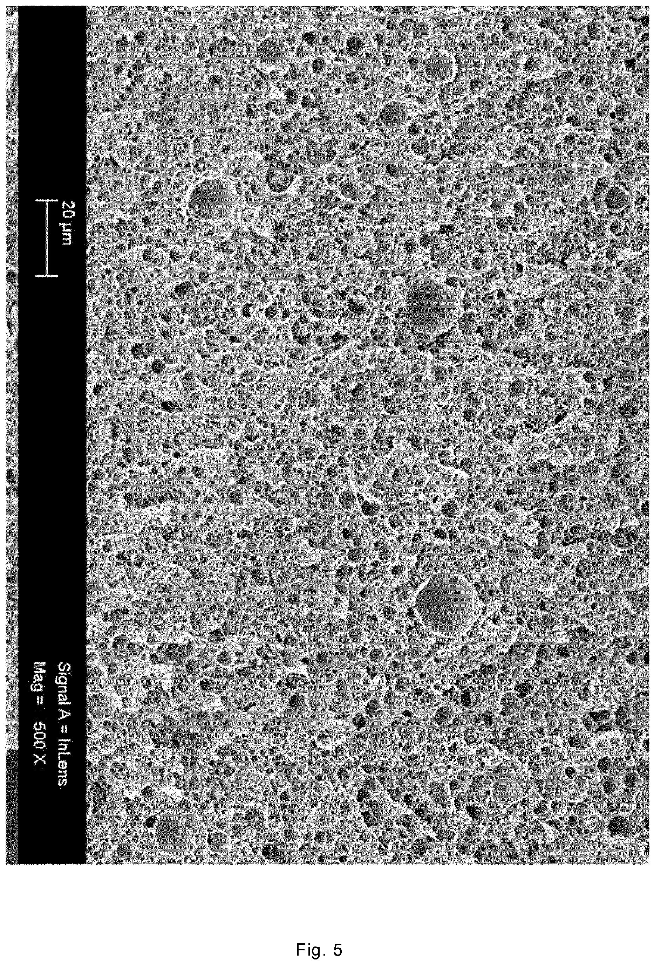

Fig. 5 Rasterelektronenmikroskopische Aufnahme eines mikrozellularen mit Furnace Ruß getrübten Polystyrolschaums. Die Dichte beläuft sich auf 98 kg/m3 mit einer bimodalen Porenstruktur, wobei die Poren deutlich größer 10 $\square$m und kleiner 10 $\square$m sind, wobei keine Poren unterhalb von 1 $\square$m erhalten wurden. Dies ist ein Beispiel für inhomogen verteiltes, agglomeriertes Trübungsmittel im Schaum.

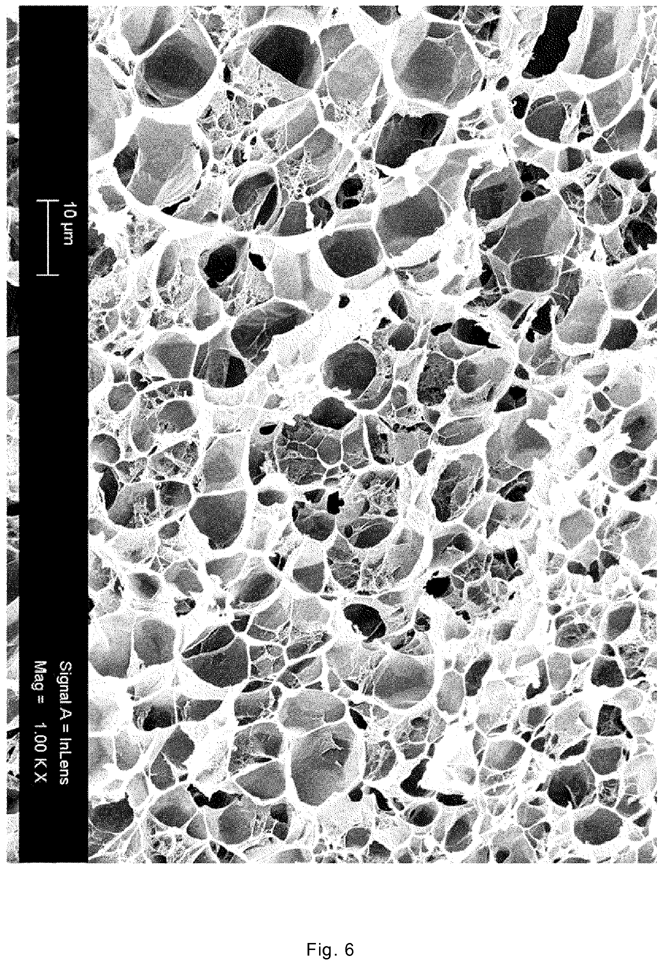

Fig. 6: Rasterelektronenmikroskopische Aufnahme eines mikrozellularen Polystyrolschaums. Die Dichte beläuft sich auf 47 kg/m$^3$ mit einer homogenen Porenstruktur im Bereich von 7 $\square$m. Die Wärmeleitung wurde bei Normalbedingungen auf 37,9 mW/mK bestimmt. Hier ist kein Trübungsmittel enthalten.

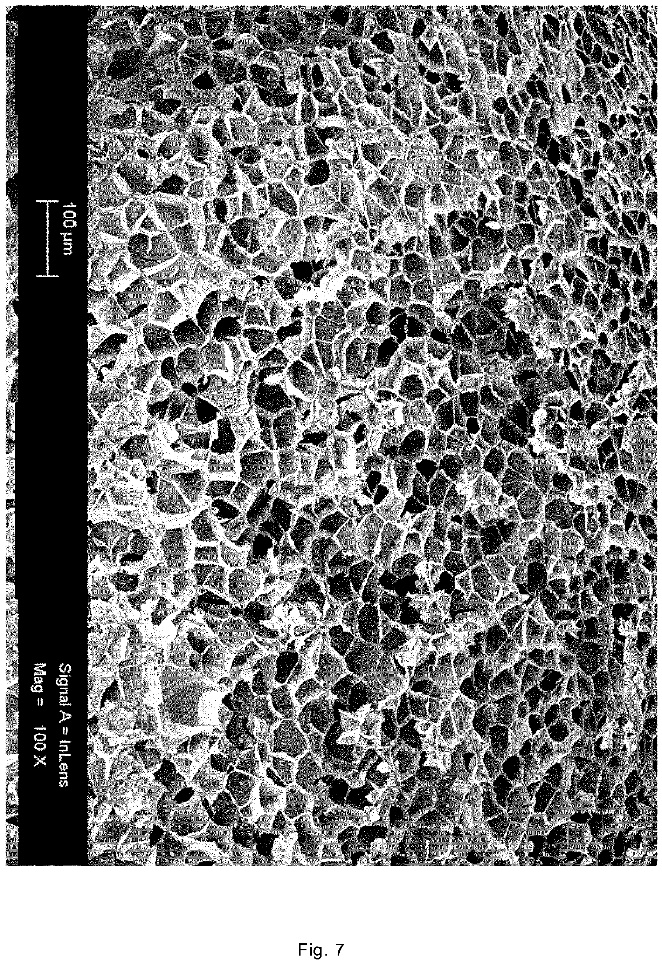

Fig. 7: Rasterelektronenmikroskopische Aufnahme eines mikrozellularen Polystyrolschaums. Die Dichte beläuft sich auf 50 kg/m3 mit einer homogenen Porenstruktur im Bereich von 50 $\square$m. Die Wärmeleitung wurde bei Normalbedingungen auf 32,5 mW/mK bestimmt.

Fig. 8: Rasterelektronenmikroskopische Aufnahme eines nanozellularen Polystyrolschaums. Die Dichte beläuft sich auf 97 kg/m3 mit einer homogenen Porenstruktur im Bereich von 0,2 $\square$m. Hier ist kein Trübungsmittel enthalten. Die Wärmeleitung wurde bei Normalbedingungen auf 40,5 mW/mK bestimmt. Zudem wurde bei gleichen Bedingungen im Vakuum eine Wärmeleitung von ca. 24 mW/mK bestimmt. Der Beitrag der Polymermatrix wird in Fig. 2 auf 9 mW/mK bestimmt (vergleichbare Dichte), was für die IR Strahlung einen Betrag von 15 mW/mK bedeutet.

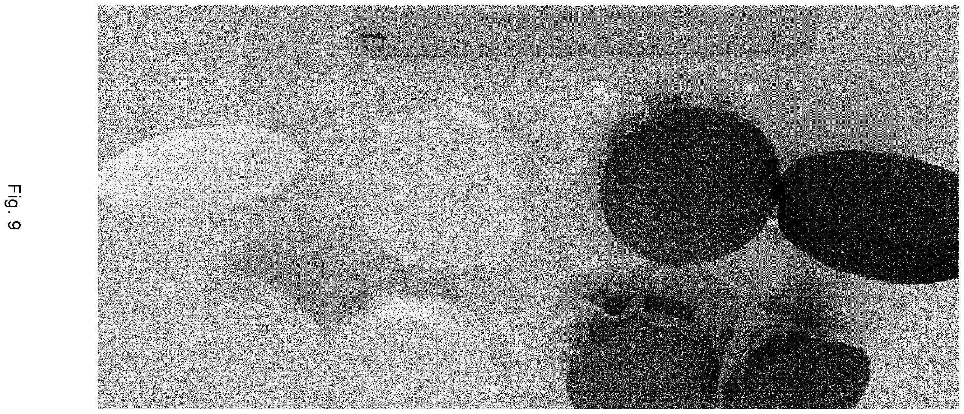

Fig. 9 Foto der makroskopischen Proben sowohl mit IR-Trübungsmittel, als auch Proben ohne IR-Trübungsmittel, die zu Referenzmessungen genutzt wurden.

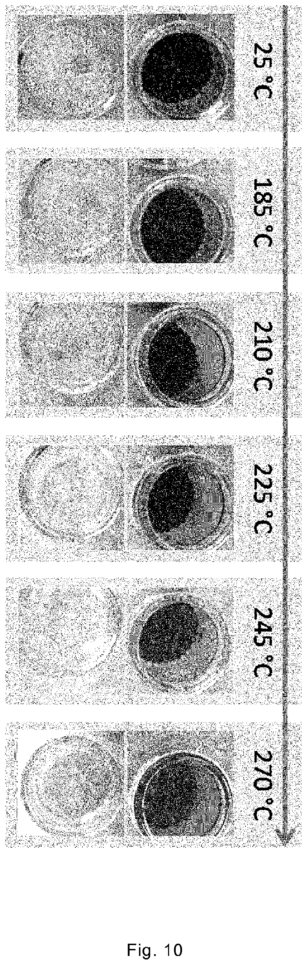

Fig. 10 Abbildung von Polymerproben (Polystyrol, oben teilvernetzt mit Ruß als Trübungsmittel, unten unvernetzt ohne Trübungsmittel) bei aufsteigenden Temperaturen. Bis 245 °C wird beobachtet, dass das unvernetzte Polymer schmilzt und das teilvernetzte Polymer die Granulatform behält. Bei 270°C verfärbt sich das unvernetzte Polymer. Es wird davon ausgegangen, dass sich sowohl das unvernetzte Polymer als auch das teilvernetzte Polymer bei dieser Temperatur zersetzt (vgl. Beispiel 8).

Im Folgenden werden verwendete Kürzel bei der Polymer- und Polymergelherstellung beschrieben, wie sie in den Beispielen verwendet werden:

Wird eine Mischung aus unterschiedlichen Monomeren verwendet, so wird dies durch den Molenbruch $\square$ eindeutig beschrieben.

$$\mu_{Monomer\,1} = \frac{n_{Monomer\,1}}{\sum_j n_{Monomer\,j}}$$

Die Konzentration des Vernetzers wird durch den Molenbruch □ aus Vernetzer und Monomer beschrieben. Durch eine optionale Multiplikation des Wertes mit 100 wird die Einheit mol% erhalten.

$$\nu = \frac{\sum_j n_{Vernetzer\,j}}{\sum_j n_{Vernetzer\,j} + \sum_j n_{Monomer\,j}} \cdot 100$$

Der Starter, der die Polymerisation einleitet und aufrechterhält, wird durch den Molenbruch □ aus Starter und Monomer beschrieben.

$$\sigma = \frac{\sum_j n_{Starter\,j}}{\sum_j n_{Starter\,j} + \sum_j n_{Monomer\,j}}$$

Das IR-Trübungsmittel wird durch einen Massenbruch, der sich auf die gesamte Masse an verwendeten Komponenten bezogen und mit □ abgekürzt.

$$\tau = \frac{\sum_j m_{Trübungsmittel\,j}}{\sum_j m_j}$$

Das unvernetzte Polymer, das zur Stabilisierung der Trübungsmittel Partikel notwendig ist, wird durch den Massenbruch □, der den Quotient aus der Masse des unvernetzen Polymers und der gesamten Masse an Komponenten beschrieben.

$$\pi = \frac{m_{unvernetztes\,Polymer}}{\sum_j m_j}$$

Das fertig polymerisierte Polymer wird vor dem Schäumprozess in ein formstabiles Polymergel überführt. Das Verhältnis von Quellmittel und Polymer wird durch den Massenbruch □ beschrieben.

$$\lambda = \frac{\sum_j m_{Quellmittel\,j}}{\sum_j m_{Quellmittel\,j} + m_{Polymer}}$$

**Ausführungsbeispiele**

**Beispiel 1:** Herstellung eines teilvernetzten Polystyrolschaums mit IR-Trübungsmittel.
Hierzu wurde das Polymer bestehend aus dem Monomer Styrol, dem IR-Trübungsmittel Flammruß 101 (□ = 0,1), unvernetztem Polystyrol (□ = 0.13) dem Vernetzer Divinylbenzol (DVB: □ = 0,15 mol%) mittels Radikalstarter Azobisisobutyronitril (AIBN: □ = 0,004) bei T = 70 °C und einer Dauer von 12 h in einer Suspensionspolymerisation in Wasser hergestellt. Die Mischung wurde vor der Polymerisation 120 Minuten lang bei einer Rührgeschwindigkeit des Rührers von 100 U/min gerührt.
Das Polymer wurde mit ca. der gleichen Masse an Aceton (□Aceton = 0,50) zu einem Polymer-Gel umgesetzt und in einer Hochdruckzelle bei p = 250 bar, T = 40 °C und t = 20 min mit $CO_2$ kontaktiert und im Anschluss auf 1 bar expandiert. Figur 1 zeigt die Schaumstruktur der Probe in unterschiedlicher Vergrößerung.

**Beispiel 2:** Herstellung eines vernetzten Polystyrolschaums mit IR-Trübungsmittel.

Hierzu wurde das Polymer bestehend aus dem Monomer Styrol, dem IR-Trübungsmittel Furnace Ruß($\square$ = 0,04), unvernetztem Polystyrol ($\square$ = 0.053) dem Vernetzer Divinylbenzol (DVB: $\square$ = 0,35 mol%) mittels Radikalstarter Azobisisobutyronitril (AIBN: $\square$ = 0,004) bei T = 70 °C und einer Dauer von 12 h in einer Suspensionspolymerisation in Wasser hergestellt. Die Mischung wurde vor der Polymerisation 120 Minuten lang bei einer Rührgeschwindigkeit des Rührers von 100 U/min gerührt.

Das Polymer wurde mit ca. der gleichen Masse an Aceton ($\square$Aceton = 0,50) zu einem Polymer-Gel umgesetzt und in einer Hochdruckzelle bei p = 250 bar, T = 40 °C und t = 20 min mit $CO^2$ kontaktiert und im Anschluss auf 1 bar expandiert. Figur 2 zeigt die Schaumstruktur der Probe in unterschiedlicher Vergrößerung.

**Beispiel 3**: Herstellung eines vernetzten Polystyrolschaums mit IR-Trübungsmittel und gleicher Zusammensetzung wie in Beispiel 1 bei dem das Trübungsmittel in Agglomeraten aufgrund einer unzureichenden Homogenisierung vorlag. Figur 4 zeigt die resultierende Schaumstruktur in einer rasterelektronenmikroskopischen Aufnahme. Hier war die Mischung vor der Polymerisation kaum gerührt worden.

**Beispiel 4:** Herstellung eines vernetzten Polystyrolschaums mit IR-Trübungsmittel und gleicher Zusammensetzung wie in Beispiel 2 bei dem das Trübungsmittel in Agglomeraten aufgrund einer unzureichenden Homogenisierung vorlag. Figur 5 zeigt die resultierende Schaumstruktur in einer rasterelektronenmikroskopischen Aufnahme. Hier war die Mischung vor der Polymerisation kaum gerührt worden. **Beispiel 5**: Herstellung eines vernetzten Polystyrolschaums (0,15 mol% DVB) ohne IR-Trübungsmittel .

Hierzu wurde das Polymer bestehend aus dem Monomer Styrol, unvernetztem Polystyrol ($\square$ = 0.13), dem Vernetzer Divinylbenzol (DVB: $\square$ = 0,15 mol%) mittels Radikalstarter Azobisisobutyronitril (AIBN: $\square$ = 0,004) bei T = 70 °C und einer Dauer von 12 h in einer Suspensionspolymerisation in Wasser hergestellt.

Das Polymer wurde mit ca. der gleichen Masse an Aceton ($\square$Aceton = 0,50) zu einem Polymer-Gel umgesetzt und in einer Hochdruckzelle bei p = 250 bar, T = 40 °C und t = 20 min mit $CO2$ kontaktiert und im Anschluss auf 1 bar expandiert. Figur 6 zeigt die Schaumstruktur der Probe in einer rasterelektronenmikroskopischen

Aufnahme.

**Beispiel 6**: Herstellung eines vernetzten Polystyrolschaums (0,05 mol% DVB) ohne IR-Trübungsmittel.

Hierzu wurde das Polymer bestehend aus dem Monomer Styrol, unvernetztem Polystyrol ($\square$ = 0.13), dem Vernetzer Divinylbenzol (DVB: $\square$ = 0,05 mol%) mittels Radikalstarter Azobisisobutyronitril (AIBN: $\square$ = 0,004) bei T = 70 °C und einer Dauer von 12 h in einer Suspensionspolymerisation in Wasser hergestellt.. Figur 7 zeigt die Schaumstruktur der Probe in unterschiedlicher Vergrößerung.

**Beispiel 7:** Herstellung eines vernetzten Polystyrolschaums (0,35 mol% DVB) ohne IR-Trübungsmittel.

Hierzu wurde das Polymer bestehend aus dem Monomer Styrol, unvernetztem Polystyrol ($\square$ = 0.053) dem Vernetzer Divinylbenzol (DVB: $\square$ = 0,35 mol%) mittels Radikalstarter Azobisisobutyronitril (AIBN: $\square$ = 0,004) bei T = 70 °C und einer Dauer von 12 h in einer Suspensionspolymerisation in Wasser hergestellt.

Das Polymer wurde mit ca. der gleichen Masse an Aceton ($\square$Aceton = 0,50) zu einem Polymer-Gel umgesetzt und in einer Hochdruckzelle bei p = 250 bar, T = 40 °C und t = 20 min mit $CO2$ kontaktiert und im Anschluss auf 1 bar expandiert. Figur 8 zeigt die Schaumstruktur der Probe in unterschiedlicher Vergrößerung. **Beispiel 8:** Zeigt den thermischen Einfluss auf vergleichbare Polymere sowohl mit Trübungsmittel und Vernetzer (oben, schwarz), als auch ohne (unten, hell).

Hierzu wurden zwei Polymere bei gleichen Bedingungen wie Temperatur und Polymerisationsdauer, sowie mit gleicher Radikalstarterkonzentration in einer wässrigen Suspension hergestellt mit dem Unterschied, dass ein Polymer Vernetzer und Trübungsmittel beinhaltet (oben) und eines ohne diese Additive (unten) polymerisiert wurde. Das Experiment wurde in einem temperierbaren Trockenschrank durchgeführt und nach Erreichen der Temperatur (s. Fig. 10) wurde diese 30 Minuten konstant gehalten und anschließend ein Foto aufgenommen, bevor die nächste Temperatur angesteuert wurde. Bei 245 °C war das getrübte und vernetze Polymer noch formstabil (Partikel noch vorhanden) und das unvernetzte Polymer bereits flüssig geworden (keine Partikel, sondern homogene Schmelze). Bei 270 °C verfärbte sich das helle Polymer bereits gelb und erst jetzt entstand beim getrübten und vernetzten Polymer ein wenig Polymerschmelze. Der Grund hierfür ist die irreversible Zersetzung der Polymere.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

**Patentansprüche**

1. Teilvernetzter Polymerschaum, der Trübungsmittel enthält, wobei die mittlere Porengröße im Median in einem Bereich von 10 nm bis 10 $\mu$m liegt.

2. Polymerschaum gemäß Anspruch 1, **dadurch gekennzeichnet, dass** die mittlere Porengröße im Median in einem Bereich von 50 nm bis 5 $\mu$m, ganz besonders bevorzugt in einem Bereich von 100 nm bis 2 $\mu$m liegt.

3. Polymerschaum gemäß einem der Ansprüche 1 bis 2, **dadurch gekennzeichnet, dass** das Volumen-Expansions-Verhältnis VER in einem Bereich von 4 bis 30, ganz besonders bevorzugt in einem Bereich von 7 bis 25 liegt.

4. Polymerschaum gemäß einem der Ansprüche 1 bis 3, **dadurch gekennzeichnet, dass** die Dichte in einem Bereich von 30 bis 300 kg/m$^3$, besonders bevorzugt in einem Bereich von 40 bis 200 kg/m$^3$, ganz besonders bevorzugt in einem Bereich von 45 bis 150 kg/m$^3$, liegt.

5. Polymerschaum gemäß einem der Ansprüche 1 bis 4, **dadurch gekennzeichnet, dass** das Trübungsmittel Strahlung mit einer Wellenlänge in einem Bereich von 1 bis 100 $\mu$m ganz besonders bevorzugt in einem Bereich von 3 bis 30 $\mu$m, absorbiert oder streut.

6. Polymerschaum gemäß einem der Ansprüche 1 bis 5, **dadurch gekennzeichnet, dass** das Trübungsmittel eine mittlere Primärpartikelgröße im Median in einem Bereich von 0,01 bis 5 $\mu$m, oder eine BET Oberfläche von > 10 m2/g aufweist.

7. Polymerschaum gemäß einem der Ansprüche 1 bis 6, **dadurch gekennzeichnet, dass** das Trübungsmittel in dem Polymerschaum in einem Bereich von 1 bis 30 Gew.%, besonders bevorzugt 1,5 bis 15 Gew.%, bezogen auf die Gesamtmasse des Polymerschaums enthalten ist.

8. Polymerschaum gemäß einem der Ansprüche 1 bis 7, **dadurch gekennzeichnet, dass** der Vernetzungsgrad in einem Bereich von 0,05 mol% bis 80 mol%, besonders bevorzugt in einem Bereich von 0,1 mol% bis 10 mol% liegt.

9. Polymerschaum gemäß einem der Ansprüche 1 bis 8, **dadurch gekennzeichnet, dass** der Anteil zur Gesamtwärmeleitung durch Infrarotstrahlung bei Normalbedingungen bis zu 25%, besonders bevorzugt bis zu 15%, ganz besonders bevorzugt bis zu 10% beträgt.

10. Polymerschaum gemäß einem der Ansprüche 1 bis 9, **dadurch gekennzeichnet, dass** das Monomer, aus dem der Polymerschaum vorzugsweise überwiegend erhalten wurde, ausgewählt ist aus Styrol und Derivaten, Methylmethacrylat und Derivaten, Milchsäure und Derivaten, Vinylchlorid und Derivaten, thermoplastisches Polyurethan und Derivaten, und/oder Polyethylen und Derivaten, und/oder Mischungen der vorgenannten Monomere.

11. Polymerschaum gemäß einem der Ansprüche 1 bis 10, **dadurch gekennzeichnet, dass** wenigstens 75 Vol.%, besonders bevorzugt wenigstens 85 Vol.%, ganz besonders bevorzugt wenigstens 95 Vol.%, der Poren einen Durchmesser in einem Bereich von 50 nm bis 10 $\mu$m, ganz besonders bevorzugt in einem Bereich von 100 nm bis 5 $\mu$m aufweisen.

12. Verfahren zur Herstellung des Polymerschaums gemäß einem der Ansprüche 1 bis 11, in dem wenigstens folgende Schritte durchgeführt werden:

    a) Zugabe von Trübungsmittel und Vernetzer zu Monomer, um eine Monomermischung zu erhalten,
    b) Polymerisieren der Monomermischung,
    c) Trocknen des erhaltenen Polymers,
    d) Quellen des Polymers mit einem Quellmittel,
    e) das gequollen Polymer wird in eine CO2-Atmosphäre mit einem Druck in einem Bereich von 50 bis 500 bar und einer Temperatur in einem Bereich von 0 bis 120 °C gebracht, und
    f) der Druck wird nach einer Wartezeit von 10 bis 180 Minuten auf den atmosphärischen Umgebungsdruck abgesenkt, womit der Polymerschaum erhalten wird.

13. Verwendung von Trübungsmittel in teilvernetztem Polymerschaum.

14. Verwendung des Polymerschaums gemäß einem der Ansprüche 1 bis 11 in Vakuumisolationspaneelen, in Dämm-material, in Leichtbaukonstruktionsbauteilen.

Fig. 1

Fig. 2

ca. 6 mm Schaumpartikel-durchmesser

ca. 8 mm Schaumpartikel-durchmesser

Fig. 3

Fig. 4

Fig. 5

Fig. 6

Fig. 7

Fig. 8

Fig. 9

Fig. 10

**Europäisches Patentamt**
**European Patent Office**
**Office européen des brevets**

## EUROPÄISCHER RECHERCHENBERICHT

Nummer der Anmeldung

EP 16 18 9993

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 679 718 A (SUH KYUNG W [US] ET AL) 21. Oktober 1997 (1997-10-21) | 1-11,13, 14 | INV. C08J9/00 |
| Y | * Seite 2, Zeile 10 - Seite 6, Zeile 28 * * Beispiele runs 5-6, 13-16, 19-20, 32-39, 42-45 * | 12 | C08J9/12 C08F12/08 C08F2/44 |
| Y,D | DE 10 2013 223391 A1 (UNIVERSITÄT ZU KÖLN [DE]) 21. Mai 2015 (2015-05-21) * Absätze [0001], [0007] - [0031] * * Beispiele 1-4 * | 12 | |
| X | WO 2009/155066 A2 (UNIV OHIO STATE RES FOUND [US]; NANOMATERIAL INNOVATION LTD [US]; CHIO) 23. Dezember 2009 (2009-12-23) | 13 | |
| A | * Beispiele 3, 5 * | 1-12,14 | |
| X,D | US 2010/148110 A1 (CASALINI ALESSANDRO [IT] ET AL) 17. Juni 2010 (2010-06-17) | 13 | |
| A | * Absätze [0002] - [0004] * * Beispiele 2-24 * | 1-12,14 | |

RECHERCHIERTE SACHGEBIETE (IPC)

C08J
C08F

Der vorliegende Recherchenbericht wurde für alle Patentansprüche erstellt

| Recherchenort | Abschlußdatum der Recherche | Prüfer |
|---|---|---|
| Den Haag | 20. März 2017 | Mayer, Anne |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 18 9993

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2017

| Im Recherchenbericht angeführtes Patentdokument | Datum der Veröffentlichung | Mitglied(er) der Patentfamilie | Datum der Veröffentlichung |
|---|---|---|---|
| US 5679718 A | 21-10-1997 | AT 266699 T | 15-05-2004 |
| | | DE 69632471 D1 | 17-06-2004 |
| | | DE 69632471 T2 | 19-05-2005 |
| | | EP 0856027 A1 | 05-08-1998 |
| | | JP 3779324 B2 | 24-05-2006 |
| | | JP H11504359 A | 20-04-1999 |
| | | US 5679718 A | 21-10-1997 |
| | | US 5854295 A | 29-12-1998 |
| | | WO 9634039 A1 | 31-10-1996 |
| DE 102013223391 A1 | 21-05-2015 | CN 105705560 A | 22-06-2016 |
| | | DE 102013223391 A1 | 21-05-2015 |
| | | EP 3068825 A2 | 21-09-2016 |
| | | JP 2016540850 A | 28-12-2016 |
| | | KR 20160086833 A | 20-07-2016 |
| | | US 2016280876 A1 | 29-09-2016 |
| | | WO 2015071463 A2 | 21-05-2015 |
| WO 2009155066 A2 | 23-12-2009 | US 2011240904 A1 | 06-10-2011 |
| | | WO 2009155066 A2 | 23-12-2009 |
| US 2010148110 A1 | 17-06-2010 | BE 1018447 A5 | 07-12-2010 |
| | | BR PI0811605 A2 | 04-11-2014 |
| | | CA 2684685 A1 | 27-11-2008 |
| | | CN 101679658 A | 24-03-2010 |
| | | DE 102008023703 A1 | 20-11-2008 |
| | | ES 2338401 A1 | 06-05-2010 |
| | | FR 2919297 A1 | 30-01-2009 |
| | | GB 2449353 A | 19-11-2008 |
| | | HU 230050 B1 | 29-06-2015 |
| | | JP 5876538 B2 | 02-03-2016 |
| | | JP 5965435 B2 | 03-08-2016 |
| | | JP 2010527391 A | 12-08-2010 |
| | | JP 2014208832 A | 06-11-2014 |
| | | JP 2014210930 A | 13-11-2014 |
| | | PL 217828 B1 | 29-08-2014 |
| | | RU 2009147010 A | 27-06-2011 |
| | | US 2010148110 A1 | 17-06-2010 |
| | | WO 2008141767 A2 | 27-11-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 10358800 A1
- EP 849309 B1
- US 4636527 A
- WO 1993022371 A1
- EP 0372343 B1
- EP 0620246 B1
- EP 2402389 A2
- DE 102008047594 A1
- DE 202010013850 U1
- EP 2092002 B1
- US 8114476 B2
- US 20100148110 A1
- DE 102013223391 A1
- US 8604091 B2
- US 8875472 B2

**In der Beschreibung aufgeführte Nicht-Patentliteratur**

- **OKOLIEOCHA C. ; RAPS D. ; SUBRAMANIAM K. ; ALTSTÄDT V.** *European Polymer Journal,* 2015, vol. 73, 500-519
- **FERKL P. ; POKORNY R. ; BOBAK J.** *Chem Eng Sci,* 2013, vol. 97, 50-8
- **NOTARIO B. ; PINTO J. ; SOLORZANO E. ; ROD-RIGUEZ-PEREZ M.A.** *Polymer,* 2015, 57-67